# EUROPÄISCHE PATENTANMELDUNG

(11) **EP 3 514 016 A1**
(43) Veröffentlichungstag der Anmeldung: **24.07.2019**
(21) Anmeldenummer: 18153042.9
(22) Anmeldetag: 23.01.2018
(51) Int. Cl.: B60R 11/00, F16B 47/00

(54) **HANDYHALTERUNG IM AUTO**

(71) Anmelder: Dagistanli, Ayhan, 72270 Baiersbronn (DE)
(72) Erfinder: Dagistanli, Ayhan, 72270 Baiersbronn (DE)
(74) Vertreter: Klocke, Peter

(57) **Zusammenfassung**

Eine lösbare Halterung (6) mit Mitteln zur Fixierung von einem oder mehreren Objekten an einer festen Oberfläche im Innenraum eines Kraftfahrzeugs, wobei die lösbare Halterung (6) zumindest einen Saugnapf aufweist, der mittels eines externen vakuumerzeugenden Systems mit einem Unterdruck beaufschlagt wird. Eine Vakuumverbindungseinrichtung (1) zum Einbau in einem Kraftfahrzeug sowie eine damit versehene vakuumerzeugende Einrichtung (2), eine Einrichtung zur lösbaren Halterung (3) von einem oder mehreren Objekten in einem Inneren eines Kraftfahrzeugs und ein System zur lösbaren Halterung (4) von einem oder mehreren Objekten in einem Inneren eines Kraftfahrzeugs mit einer lösbaren Halterung (6) und einer vakuumerzeugenden Einrichtung (2). Verwendung einer in einem Kraftfahrzeug standardmäßig vorhandenen Vakuumpumpe (5) zusammen mit einer erfindungsgemäßen Vakuumverbindungseinrichtung (1) oder zusammen mit einer erfindungsgemäßen Einrichtung zur lösbaren Halterung (3).

## Beschreibung

Die Erfindung betrifft eine lösbare Halterung mit Mitteln zur Fixierung von einem oder mehreren Objekten an einer festen Oberfläche in einem Innenraum eines Kraftfahrzeugs, wobei die lösbare Halterung zumindest einen Saugnapf aufweist. Des Weiteren betrifft die Erfindung eine Vakuumverbindungseinrichtung zum Einbau in einem Kraftfahrzeug sowie eine damit versehene vakuumerzeugende Einrichtung, eine Einrichtung zur lösbaren Halterung von einem oder mehreren Objekten in einem Inneren eines Kraftfahrzeugs und ein System zur lösbaren Halterung von einem oder mehreren Objekten in einem Inneren eines Kraftfahrzeugs mit einer lösbaren Halterung und einer vakuumerzeugenden Einrichtung. Schließlich betrifft die Erfindung die Verwendung einer in einem Kraftfahrzeug standardmäßig vorhandenen Vakuumpumpe zusammen mit einer erfindungsgemäßen Vakuumverbindungseinrichtung oder zusammen mit einer erfindungsgemäßen Einrichtung zur lösbaren Halterung.

In einem Kraftfahrzeug besteht stets das Problem, das bei Beschleunigung und Bremsen des Fahrzeugs ungesichert im fahrzeuginnenraum befindliche Objekte oder Geräte sich unkontrolliert durch den Fahrzeuginnenraum bewegen können und dabei beschädigt werden. Auch Insassen des Fahrzeugs können dabei verletzt oder andere Objekte im Fahrzeuginnenraum wie auch der Fahrzeuginnenraum selbst können beschädigt werden. Des Weiteren sollen Objekte wie Smartphones, E-Book Reader, portable Navigationsgeräte, Dashcams oder Bildschirme von (nachrüstbaren oder portablen) Entertainmentsystemen an bestimmten Position im Fahrzeug angeordnet und gesichert werden, insbesondere während der Fahrt mit dem Kraftfahrzeug. Hierfür sind fest installierte oder portable Halterungen für die ohne Anspruch auf Vollständigkeit vorstehend genannten Geräte oder andere Objekte, wie z. B. Notizblock und Stift oder auch Bücher, erforderlich. Ein standardmäßiger Einbau, insbesondere mehrere derartiger Halterungen an verschiedenen Orten, in einem Inneren eines Kraftfahrzeugs, durch die zudem noch eine Vielzahl an verschieden schweren und großen Objekten gleichzeitig fixierbar sein müsste, ist aufwendig und kostspielig.

Der Erfindung liegt daher die Aufgabe zugrunde, eine bewegbare, lösbare Halterung von einem oder mehreren Objekten in einem Innenraum eines Kraftfahrzeugs vorzuschlagen, die an einer beliebigen festen Oberfläche in einem Innenraum eines Kraftfahrzeugs anordenbar und lösbar fixierbar ist.

Diese Aufgabe wird erfindungsgemäß durch eine lösbaren Halterung nach Anspruch 1, einer Vakuumverbindungseinrichtung nach Anspruch 4, einer vakuumerzeugenden Einrichtung nach Anspruch 11, einer Einrichtung zur lösbaren Halterung nach Anspruch 13 und einem System zur lösbaren Halterung nach Anspruch 14 gelöst. Weitere vorteilhafte Ausgestaltungsvarianten der Erfindung sind den jeweiligen rückbezogenen Unteransprüchen zu entnehmen.

Eine erfindungsgemäße lösbare Halterung mit Mitteln zur lösbaren Fixierung von einem oder mehreren Objekten an einer festen Oberfläche in einem Innenraum eines Kraftfahrzeugs weist demnach zumindest einen Saugnapf auf, der mittels eines externen vakuumerzeugenden Systems mit einem Unterdruck beaufschlagt wird. Gegenüber Saugnäpfen ohne zusätzliche, externe Beaufschlagung mit einem Vakuum wird so die Haltewirkung der Saugnäpfe im Hinblick auf große Lasten an der lösbaren Halterung und auf problematische Untergründe, auf denen die Halterung angeordnet und lösbar fixiert werden soll, etwa raue Untergründe oder in einem gewissen Maß gekrümmte Untergründe, deutlich verbessert. Die lösbare Halterung kann als eine Halterung für ein Objekt oder Gerät ausgestaltet sein. Die lösbare Halterung kann auch als Halterung für eine Geräte- oder Objektgattung oder für eine Vielzahl unterschiedlicher Objekte oder Geräte ausgestaltet sein, wobei die Halterung sowohl für das Halten eines als auch mehrerer Objekte oder Geräte gleichzeitig ausgebildet sein kann. Die lösbare Halterung kann auch als Halterung für zumindest eine weitere Halterung ausgestaltet sein, die wiederum als Halterung für ein Objekt oder Gerät, für eine Objekt- oder Gerätegattung oder für eine Vielzahl unterschiedlicher Objekte oder Geräte, gegebenenfalls auch für mehrere Geräte oder Objekte gleichzeitig, ausgebildet sein kann.

In einer bevorzugten Ausgestaltungsvariante weist die lösbare Halterung Mittel zur Ausbildung einer Vakuumverbindung auf, etwa einen Vakuumstecker oder eine Vakuumkupplung zum Herstellen einer Vakuumverbindung mit einem entsprechenden, passenden Gegenstück auf. Eine Integration vorzugsweise standardisierter Mittel zur Ausbildung einer Vakuumverbindung in oder an der lösbaren Halterung ermöglicht die einfache Verbindung der Halterung mit einer Vakuumversorgung.

In einer weiteren favorisierten Ausgestaltungsvariante weist die lösbare Halterung mindestens eine Vakuumleitung mit zumindest einem Mittel zur Herstellung einer Vakuumverbindung mit einem entsprechenden, passenden Gegenstück auf, etwa einen Vakuumstecker oder eine Vakuumkupplung. Das Vorsehen einer vorzugsweise flexibel ausgestalteten Vakuumleitung verbessert die Flexibilität hinsichtlich der Anordnung und lösbaren Fixierung der lösbaren Halterung an einer Position in einem Innenraum eines Kraftfahrzeugs.

Eine erfindungsgemäße Vakuumverbindungseinrichtung zu Einbau in einem Kraftfahrzeug umfasst zumindest eine Vakuumleitung und zumindest an einem Ende Mittel zur Ausbildung einer Vakuumverbindung, etwa eine Vakuumkupplung oder einen Vakuumstecker zum Herstellen einer Vakuumverbindung mit einem entsprechenden, passenden Gegenstück, insbesondere mit einer erfindungsgemäßen lösbaren Halterung. Das oder die Mittel zur Ausbildung einer Vakuumverbindung sind derart ausgebildet, dass sie an einer geeigneten Position in einem Inneren eines Kraftfahrzeugs anordenbar sind, etwa am Armaturenbrett, an einer Konsole oder auch an einem Sitz. Eine erfindungsgemäße Vakuumverbindungseinrichtung ist im Rahmen der Kraftfahrzeugmontage in ein Kraftfahrzeug einbaubar. Ebenso ist eine erfindungsgemäße Vakuumverbindungseinrichtung nachträglich in ein bestehendes Kraftfahrzeug einbaubar, d. h., nachrüstbar.

In einer bevorzugten Ausgestaltungsvariante einer erfindungsgemäßen Vakuumverbindungseinrichtung weisen das oder die Mittel zur Ausbildung einer Vakuumverbindung an einem Ende der Vakuumverbindungseinrichtung eine an das Fahrzeuginterieur angepasste Blende oder dergleichen auf, die etwa in ein Armaturenbrett oder in eine Konsole eines Kraftfahrzeugs integrierbar ist. Die Blende kann etwa eine Abdeckung oder einen Deckel zum Schutz des oder der Mittel zur Ausbildung einer Vakuumverbindung aufweisen.

In einer weiteren bevorzugten Ausgestaltungsvariante umfasst eine erfindungsgemäße Vakuumverbindungeinrichtung zumindest ein Ventil. Ein solches Ventil weist mindestens zwei Stellungen auf, wobei bei einer ersten Stellung die Vakuumleitung vollständig blockierbar ist und in einer zweiten Stellung vollständig freigebbar ist. Zudem weist ein derartiges Ventil zumindest ein Stellelement, etwa einen Antrieb auf, das eine ferngesteuerte und/oder automatische Änderung der Stellung des Ventils ermöglicht. Bei möglichen weiteren Stellungen des Ventils kann die Vakuumleitung nur teilweise freigebbar sein und das Ventil als regelndes Element für die Vakuumleitung bzw. für die Vakuumverbindungseinrichtung ausgebildet sein.

Eine weitere favorisierte Ausgestaltungsvariante einer erfindungsgemäßen Vakuumverbindungseinrichtung beinhaltet zumindest eine Bedieneinheit zur Steuerung des mindestens einen Stellelements durch einen Benutzer. Die Bedieneinheit ist zur Anordnung an einer geeigneten Position in einem Innenraum eines Kraftfahrzeugs ausgebildet, etwa an einem Armaturenbrett oder an einer Konsole. Vorzugsweise ist die Bedieneinheit an das jeweilige Fahrzeuginterieur angepasst. Zur Bedienung durch einen Benutzer kann die Bedieneinheit einen oder mehrere Knöpfe, Schalter, Drehregler oder dergleichen aufweisen. Des Weiteren kann sie Markierungen hinsichtlich der möglichen Stellungen des mit dem Bedienelement verbundenen Stellelements bzw. des dem Stellelement zugeordneten Ventils aufweisen.

Ferner kann die Bedieneinheit Indikatoren wie eine oder mehrere Signalleuchtdioden oder ein Display aufweisen, die einen Benutzer über den Zustand des Schaltelements bzw. des zugeordneten Ventils oder der Vakuumverbindungseinrichtung als solches informieren. Die Bedieneinheit kann eine Regeleinheit zur automatischen Regelung der Vakuumverbindungseinrichtung über das Stellelement und das zugehörige Ventil aufweisen, wobei die Regeleinheit an geeigneter Stelle an oder in der Vakuumverbindungseinrichtung angeordnete zweckmäßige oder notwendige Sensoren, z. B. Drucksensoren, umfassen kann.

In einer zusätzlichen Ausgestaltungsvariante einer erfindungsgemäßen Vakuumverbindungseinrichtung umfasst die Vakuumverbindungseinrichtung mindestens einen Vakuumspeicher. Als Vakuumspeicher ist dabei ein Vakuumbehälter zu verstehen, mit dem ein bestehendes Vakuum ohne vakuumerzeugende Einheit(en), d. h. etwa eine oder mehrere Vakuumpumpen, zumindest eine Zeitlang aufrecht erhalten werden kann.

In einer zusätzlichen bevorzugten Ausgestaltungsvariante einer erfindungsgemäßen Vakuumverbindungeinrichtung ist der mindestens eine Vakuumspeicher über zumindest ein Ventil mit wenigstens zwei Stellungen mit dem Rest der Vakuumverbindungseinrichtung verbunden bzw. verbindbar. In einer ersten Stellung des mindestens einen Ventils ist der mindestens eine Vakuumspeicher getrennt von dem Rest der Vakuumverbindungseinrichtung, d. h. abgeschaltet, in einer zweiten Stellung ist der mindestens eine Vakuumspeicher mit dem Rest der Vakuumverbindungseinrichtung verbunden, d. h., zugeschaltet. Zudem weist ein derartiges Ventil zumindest ein Stellglied auf, etwa einen Antrieb auf, das eine ferngesteuerte und/oder automatische Änderung der Stellung des Ventils ermöglicht. Bei möglichen weiteren Stellungen des Ventils könnte die Verbindung zwischen dem mindestens einen Vakuumspeicher und dem Rest der Vakuumverbindungseinrichtung nur teilweise freigebbar sein und das Ventil als regelndes Element für den Vakuumspeicher bzw. für die Vakuumverbindung als solches ausgebildet sein.

Einer weiteren bevorzugten Ausgestaltungsvariante einer erfindungsgemäßen Vakuumverbindungseinrichtung beinhaltet zumindest ein Bedienelement zur Steuerung des mindestens einen Stellglieds durch einen Benutzer. Das Bedienelement ist zur Anordnung an einer geeigneten Position in einem Innenraum eines Kraftfahrzeugs ausgebildet, etwa an einem Armaturenbrett oder an einer Konsole. Vorzugsweise ist die Bedieneinheit an das jeweilige Fahrzeuginterieur angepasst. Zur Bedienung durch einen Benutzer kann das Bedienelement einen oder mehrere Knöpfe, Schalter, Drehregler oder dergleichen aufweisen. Des Weiteren kann es Markierungen hinsichtlich der möglichen Stellungen des mit dem Bedienelement verbundenen Stellglieds bzw. des dem Stellglied zugeordneten Ventils aufweisen. Ferner kann das Bedienelement Indikatoren wie eine oder mehrere Signalleuchtdioden oder ein Display aufweisen, die einen Benutzer über den Zustand des Stellglieds bzw. des zugeordneten Ventils, des Vakuumspeichers oder der Vakuumverbindungseinrichtung als solches informieren. Das Bedienelement kann eine Regeleinheit zur automatischen Regelung des Vakuumspeichers und/oder der Vakuumverbindungseinrichtung als Ganzes über das Stellglied und das zugehörige Ventil aufweisen, wobei die Regeleinheit an geeigneter Stelle an oder in dem Vakuumspeicher und/oder der Vakuumverbindungseinrichtung als Ganzes angeordnete zweckmäßige oder notwendige Sensoren, z. B. Drucksensoren, umfassen kann. Das Bedienelement in die Bedieneinheit integriert sein oder mit diesem eine gemeinsame Einheit bilden. Ebenso kann auch die Bedieneinheit in das Bedienelement integriert sein oder mit diesem eine gemeinsame Einheit bilden.

Eine erfindungsgemäße vakuumerzeugende Einrichtung umfasst zumindest eine vakuumerzeugende Einheit, etwa eine oder mehrere Vakuumpumpen, und eine erfindungsgemäße Vakuumverbindungseinrichtung wie in den vorstehenden Abschnitten beschrieben.

In einer favorisierten Ausgestaltungsvariante einer erfindungsgemäßen vakuumerzeugenden Einrichtung ist die vakuumerzeugende Einheit eine in einem Kraftfahrzeug bereits standardmäßig vorhandene Vakuumpumpe. Dies erleichtert den nachträglichen Einbau bzw. die Nachrüstung einer erfindungsgemäßen vakuumerzeugenden Einrichtung in einem Kraftfahrzeug erheblich, da zur nachträglichen Ausbildung einer erfindungsgemäßen vakuumerzeugenden Einrichtung lediglich die Vakuumverbindungseinrichtung nachgerüstet und mit der bereits vorhandenen Vakuumpumpe verbunden werden muss. Ist ein Einbau einer vakuumerzeugenden Einheit in ein Kraftfahrzeug bereits bei der Kraftfahrzugmontage vorgesehen, so ist es auch dann zweckmäßig, eine bereits für andere Zwecke im Kraftfahrzeug, etwa für das Bremssystem, vorgesehene Vakuumpumpe für eine parallele Verwendung als vakuumerzeugende Einheit für die vakuumerzeugende Einrichtung vorzusehen, um unnötigen Aufwand und Kosten bedingt durch Doppelstrukturen zu vermeiden.

Eine erfindungsgemäße Einrichtung zur lösbaren Halterung von einem oder mehreren Objekten in einem Inneren einen Kraftfahrzeugs umfasst zumindest eine erfindungsgemäße lösbare Halterung und eine erfindungsgemäße Vakuumverbindungseinrichtung.

Ein erfindungsgemäßes System zur lösbaren Halterung von einem oder mehreren Objekten im Inneren eines Kraftfahrzeugs umfasst zumindest eine erfindungsgemäße lösbare Halterung und eine erfindungsgemäße vakuumerzeugende Einrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale der unabhängigen Ansprüche verwirklicht sein. Auch können einzelne Merkmale der unabhängigen oder nebengeordneten Ansprüche durch andere offenbarte Merkmale oder Merkmalskombinationen ersetzt werden.

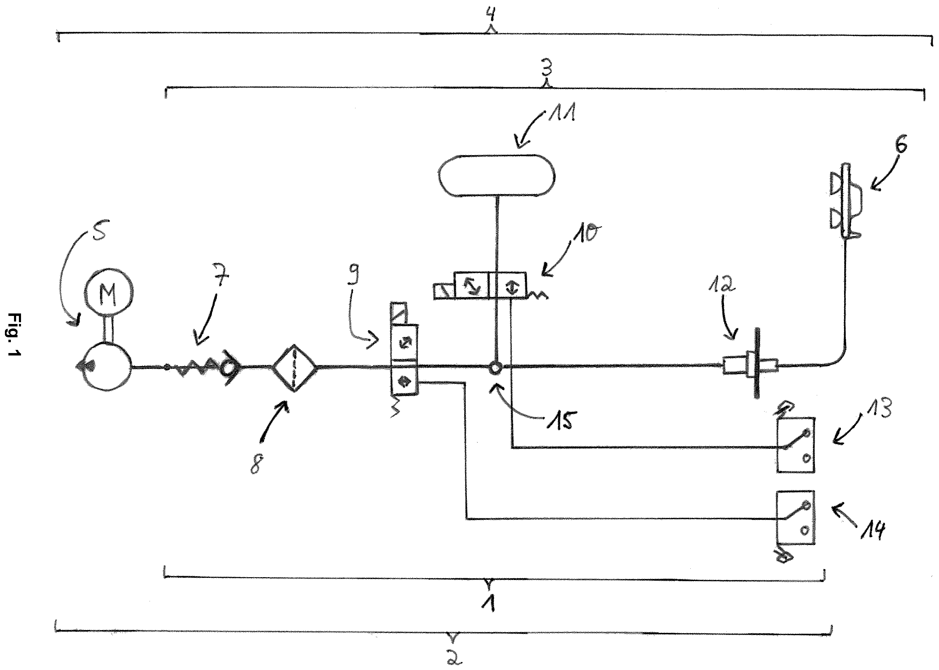

Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet. Dabei zeigt
- Fig. 1: eine schematische Darstellung eines System zur lösbaren Halterung von einem oder mehreren Objekten in einem Inneren eines Kraftfahrzeugs.

In der schematischen Darstellung in Fig. 1 sind eine erfindungsgemäße Vakuumverbindungseinrichtung 1, eine erfindungsgemäße vakuumerzeugende Einrichtung 2, eine erfindungsgemäße Einrichtung zur lösbaren Halterung 3 von einem oder mehreren Objekten in einem Innenraum eines Kraftfahrzeugs und ein System zur lösbaren Halterung 4 von einem oder mehreren Objekten in einem Innenraum eines Kraftfahrzeugs gemeinsam dargestellt.

Die in Fig. 1 exemplarisch dargestellte, erfindungsgemäße Vakuumverbindungseinrichtung 1 umfasst dabei ein Rückschlagventil 7, einen Filter 8, ein erstes Ventil 9, ein zweites Ventil 10, einen Vakuumspeicher 11, Mittel zur Ausbildung einer Vakuumverbindung 12 sowie ein erstes Bedienelement 13 und ein zweites Bedienelement 14. Alle Bestandteile der Vakuumverbindungseinrichtung 1 sind durch adäquate vakuumführende Verbindungen (etwa vakuumführende Rohre oder Schläuche) und entsprechende gegenseitige Verbindungsmittel (etwa Vakuumkupplungen und Stecker) vakuumführend miteinander verbunden.

Des Weiteren zeigt Fig. 1 die erfindungsgemäße vakuumerzeugende Einrichtung 2, die aus der Vakuumverbindungseinrichtung 1 und einer Vakuumpumpe 5 besteht. Die Vakuumpumpe 5 ist bevorzugter Weise, aber nicht notwendigerweise, eine bereits in einem Kraftfahrzeug vorhandene Vakuumpumpe, die bereits für einen anderen Zweck Verwendung findet und für eine parallele Zweitverwendung modifiziert werden kann.

Die in Fig. 1 exemplarisch dargestellte Einrichtung zur lösbaren Halterung 3 eines oder mehreren Objekten in einem Innenraum eines Kraftfahrzeugs umfasst die Vakuumverbindungseinrichtung 1 und die lösbare Halterung 6. Das System zur lösbaren Halterung 4 eines oder mehrerer Objekte in einem Innenraum eines Kraftfahrzeugs umfasst die vakuumerzeugende Einrichtung 2 und die lösbare Halterung 6.

Ist die Vakuumpumpe 1 nicht im Betriebszustand, insbesondere dann, wenn das Kraftfahrzeug nicht in Betrieb ist, so steigt der Druck in der Vakuumverbindungseinrichtung 1 und die Einrichtung zur lösbaren Halterung 3 ebenso wie das System zur lösbaren Halterung 4 verliert seine Haltewirkung. Daher ist ein Rückschlagventil 7 unmittelbar folgend auf die Vakuumpumpe 5 Bestandteil der Vakuumverbindungseinrichtung 1. Steigt der Druck in der Vakuumverbindungseinrichtung 1 über einen bestimmten Wert hinaus aus an, dann löst das Rückschlagventil aus und trennt die Vakuumverbindung zwischen der Vakuumpumpe und dem Rest der Vakuumverbindungseinrichtung 1. Dadurch kann das bestehende Restvakuum in der Vakuumverbindungseinrichtung 1 und damit die Haltewirkung der Einrichtung zur lösbaren Halterung 3 bzw. des Systems zur lösbaren Halterung 4 länger aufrechterhalten werden. Ein weiteres Sicherungselement innerhalb der Vakuumverbindungseinrichtung 1 ist der Vakuumfilter 8, der die Vakuumpumpe vor eventuell in die Vakuumverbindungseinrichtung 1 gelangenden Fremdkörper schützt. Dies ist insbesondere wesentlich, falls eine in einem Kraftfahrzeug bereits vorhandene Vakuumpumpe mit der vakuumerzeugenden Einrichtung 2, der Einrichtung zur lösbaren Halterung 3 bzw. dem System zur lösbaren Halterung 4 einer Zweitverwendung zugeführt wird und diese Vakuumpumpe primär eine sicherheitskritische Verwendung hat, etwa als Vakuumpumpe für das Bremssystem. Ein magnetisches Vakuumventil 9 ermöglicht die Unterbrechung oder Freigabe der Vakuumleitung in der Vakuumverbindungseinrichtung 1 durch ein mit dem Ventil 9 verbundenen, in einem Innenraum eines Kraftfahrzeug an geeigneter Stelle angeordneten Bedienelements 14 durch einen in diesem Innenraum befindlichen Nutzer. Eine Unterbrechung der Vakuumverbindung ist etwa dann zweckmäßig, falls die lösbare Halterung 6 bei Betrieb des Kraftfahrzeugs ebenso wie der Einrichtung zur lösbaren Halterung 3 bzw. des Systems zur lösbaren Halterung 4 an eine andere Position im Inneren des Fahrzeugs oder in eine Nichtgebrauchsposition gebracht werden soll.

Eine Trennung der Vakuumverbindung mittels des Ventils 9 über das Bedienelement 14 erleichtert das Ablösen der lösbaren Halterung 6 von der aktuellen Position auf einer festen Oberfläche in einem Innenraum eines Kraftfahrzeugs durch einen Benutzer. Im Fall der Repositionierung kann die Vakuumverbindung nach verbringen der lösbaren Halterung 6 in eine neue Position an einer festen Oberfläche in einem Innenraum eines Kraftfahrzeugs durch einen Benutzer über das Bedienelement 14 und das Ventil 9 wiederhergestellt werden.

Um das bestehende Restvakuum in der vakuumerzeugenden Einrichtung 2, der Einrichtung zur lösbaren Halterung 3 bzw. dem System zur lösbaren Halterung 4 im Außerbetriebszustand eines Fahrzeugs bzw. der Vakuumpumpe 5 und damit der Haltewirkung der Einrichtung zur lösbaren Halterung 3 bzw. dem System zur lösbaren Halterung 4 länger zu erhalten, beinhaltet die Vakuumverbindungseinrichtung 1 einen Vakuumspeicher 11. In dem hier schematisch dargestellten Ausführungsbeispiel ist dieser über eine Vakuumabzweigung mit dem Rest der Vakuumverbindungseinrichtung 1 verbunden und kann mittels eines Magnetventils 10 zugeschaltet oder abgeschaltet werden. Die Zuschaltung oder Abschaltung des Vakuumspeichers 11 kann bei Bedarf von einem Nutzer in einem Innenraum eines Kraftfahrzeugs an geeigneter Stelle in diesem Innenraum angeordneten Bedienelements 13 erfolgen. In einer einfacheren Variante als der hier exemplarisch vorgestellten Vakuumverbindungseinrichtung 1 ist der Vakuumspeicher 11 in Line mit dem Rest der Vakuumverbindungseinrichtung 1 und nicht in einem separaten und separierbaren Zweig der Vakuumverbindungseinrichtung 1 angeordnet. Dann besteht jedoch keine Möglichkeit, den Vakuumspeicher 11 durch ein Ventil wie das Magnetventil 10 abzuschalten oder zuzuschalten und das entsprechende Bedienelement 13 in einem Innenraum eines Kraftfahrzeugs entfällt. Die Vakuumverbindungseinrichtung 1 endet mit einem Mittel zur Ausbildung einer Vakuumverbindung 12, etwa einer Vakuumkupplung, mit einem entsprechenden Gegenstück, im Fall einer Vakuumkupplung etwa mit einem passenden Vakuumstecker. Das Ende der Vakuumverbindungseinrichtung 1 mit den Mitteln zur Ausbildung einer Vakuumverbindung 12 sind an einer geeigneten Stelle in einem Innenraum eines Kraftfahrzeugs angeordnet und fixiert, etwa im Bereich des Armaturenbretts oder einer Konsole. Vorzugsweise sind die Mittel zur Ausbildung einer Vakuumverbindung 12 mit einer Blende oder dergleichen versehen, die an das Interieur des Kraftfahrzeugs angepasst ist, in dem die Vakuumverbindungseinrichtung 1 eingebaut ist bzw. in das die Vakuumverbindungseinrichtung 1 einbaubar ist.

Die erfindungsgemäße lösbare Halterung 6 umfasst geeignete Mittel zur Ausbildung einer Vakuumverbindung mit den Mitteln zur Ausbildung einer Vakuumverbindung 12 der Vakuumverbindungseinrichtung 1, also etwa eine Vakuumstecker. Ein solcher Vakuumstecker kann direkt an der lösbaren Halterung 6 angeordnet sein, so dass die lösbare Halterung bei Verwendung in der unmittelbaren Umgebung der Mittel zur Ausbildung einer Vakuumverbindung 12 in einem Innenraum eines Kraftfahrzeugs platziert ist. Alternativ kann ein solcher Vakuumstecker an einem Ende einer Vakuumleitung, vorzugsweise eine flexibler Vakuumschlauch, dessen anderes Ende mit der lösbaren Halterung 6 verbunden ist, angeordnet sein, wodurch sich eine deutlich verbesserte Flexibilität hinsichtlich der Positionierbarkeit der lösbaren Halterung 6 in einem Innenraum eines Kraftfahrzeugs im Verwendungszustand der lösbaren Halterung 6 ergibt.

### Bezugszeichenliste

- 1.: Vakuumverbindungseinrichtung
- 2.: Vakuumerzeugende Einrichtung
- 3.: Einrichtung zur lösbaren Halterung
- 4.: System zur lösbaren Halterung
- 5.: Vakuumpumpe
- 6.: Lösbare Halterung
- 7.: Rückschlagventil
- 8.: Filter
- 9.: Erstes Ventil
- 10.: Zweites Ventil
- 11.: Vakuumspeicher
- 12.: Kupplung mit Blende
- 13.: Erstes Bedienelement
- 14.: Zweites Bedienelement
- 15.: Vakuumabzweigung

## Patentansprüche

1. Lösbare Halterung (6) mit Mitteln zur lösbaren Fixierung von einem oder mehreren Objekten an einer festen Oberfläche in einem Innenraum eines Kraftfahrzeugs, wobei die lösbare Halterung (6) zumindest einen Saugnapf aufweist, **dadurch gekennzeichnet, dass** der mindestens eine Saugnapf mittels eines externen vakuumerzeugenden Systems mit einem Unterdruck beaufschlagbar ist.

2. Lösbare Halterung (6) nach Anspruch 1, **dadurch gekennzeichnet, dass** die Halterung Mittel zur Herstellung einer Vakuumverbindung aufweist.

3. Lösbare Halterung (6) nach Anspruch 2, **dadurch gekennzeichnet, dass** die Mittel zur Herstellung eine Vakuumverbindung zumindest eine Vakuumleitung und an einem Ende der Vakuumleitung mindestens ein Mittel zur Herstellung einer Vakuumverbindung umfasst.

4. Vakuumverbindungseinrichtung (1) zum Einbau in einem Kraftfahrzeug, **gekennzeichnet durch** mindestens eine Vakuumleitung und Mittel zur Ausbildung einer Vakuumverbindung (12) zumindest an einem Ende der Vakuumleitung zur Anordnung am Armaturenbrett eines Kraftfahrzeugs oder einer anderen geeigneten Position im Innenraum des Kraftfahrzeugs.

5. Vakuumverbindungseinrichtung (1) nach Anspruch 4, **dadurch gekennzeichnet, dass** das oder die Mittel zur Ausbildung einer Vakuumverbindung (12) zumindest eine an das Kraftfahrzeuginterieur angepasste Blende aufweisen.

6. Vakuumverbindungseinrichtung (1) nach Anspruch 4 oder 5, **gekennzeichnet durch** zumindest ein Ventil (9), das wenigstens zwei Stellungen derart aufweist, so dass die Vakuumleitung einerseits unterbrechbar und andererseits freigebbar ist, wobei das Ventil (9) mindestens ein Stellelement umfasst, mit dem die Stellung des zumindest einen Ventils (9) veränderbar ist.

7. Vakuumverbindungseinrichtung (1) nach Anspruch 6, **gekennzeichnet durch** zumindest eine an einer geeigneten Position im Innenraum des Kraftfahrzeugs anordenbare Bedieneinheit (14) zur Steuerung des mindestens einen Stellelements durch einen Benutzer.

8. Vakuumverbindungseinrichtung (1) nach Anspruch 7, **gekennzeichnet durch** mindestens einen Vakuumspeicher (11).

9. Vakuumverbindungseinrichtung (1) nach Anspruch 8, **gekennzeichnet durch** zumindest ein Ventil (10), das wenigstens zwei Stellungen derart aufweist, so dass der mindestens eine Vakuumspeicher (11) einerseits zuschaltbar und andererseits abschaltbar ist, wobei das Ventil (10) mindestens ein Stellglied umfasst, mit dem die Stellung des zumindest einen Ventils veränderbar ist.

10. Vakuumverbindungseinrichtung (1) nach Anspruch 9, **gekennzeichnet durch** mindestens ein an einer geeigneten Position im Innenraum des Kraftfahrzeugs anordenbares Bedienelement (13) zur Steuerung des mindestens einen Stellglieds durch einen Benutzer.

11. Vakuumerzeugende Einrichtung, **gekennzeichnet durch** zumindest eine vakuumerzeugende Einheit und eine Vakuumverbindungseinrichtung (1) nach einem der Ansprüche 4 bis 10.

12. Vakuumerzeugende Einrichtung (2) nach Anspruch 11, **dadurch gekennzeichnet, dass** die vakuumerzeugende Einheit eine in einem Kraftfahrzeug standardmäßig vorhandene Vakuumpumpe (5) ist.

13. Einrichtung zur lösbaren Halterung (3) von einem oder mehreren Objekten in einem Innenraum eines Kraftfahrzeugs, **gekennzeichnet durch** zumindest eine lösbare Halterung (6) nach einem der Ansprüche 1 bis 3 und eine Vakuumverbindungseinrichtung (1) nach einem der Ansprüche 4 bis 10.

14. System zur lösbaren Halterung (4) von einem oder mehreren Objekten in einem Innenraum eines Kraftfahrzeugs, **gekennzeichnet durch** zumindest eine lösbare Halterung (6) nach einem der Ansprüche 1 bis 3 und eine vakuumerzeugende Einrichtung (2) nach einem der Ansprüche 11 oder 12.

15. Verwendung einer in einem Kraftfahrzeug standardmäßig vorhandenen Vakuumpumpe (5) zusammen mit einer Vakuumverbindungseinrichtung (1) nach einem der Ansprüche 4 bis 10 oder zusammen mit einer Einrichtung zur lösbaren Halterung (3) nach Anspruch 13.
